Europäisches Patentamt

European Patent Office

Office européen des brevets

(11) Publication number: **0 349 029**
**A1**

## EUROPEAN PATENT APPLICATION

(21) Application number: **89201518.1**

(22) Date of filing: **12.06.89**

(51) Int. Cl.⁴: **A01G 9/12 , B65H 75/40**

(30) Priority: **28.06.88 NL 8801636**

(43) Date of publication of application:
**03.01.90 Bulletin 90/01**

(84) Designated Contracting States:
**AT BE CH DE ES FR GB GR IT LI LU NL SE**

(71) Applicant: **Delisse, Willem Jozef**
**Groothees 11**
**NL-5469 ST Erp(NL)**

(72) Inventor: **Delisse, Willem Jozef**
**Groothees 11**
**NL-5469 ST Erp(NL)**

(74) Representative: **Noz, Franciscus Xaverius, Ir.**
**et al**
**Algemeen Octrooibureau P.O. Box 645**
**NL-5600 AP Eindhoven(NL)**

(54) **Device for supporting a plant.**

(57) The invention relates to a device for supporting a plant by means of a string attached to the device, whereby the device is provided with a casing (1) and a supporting part (13) connected to the casing, by which the device can be coupled to a horizontally extending wire, such that the device can be moved along the wire. In the casing there is rotatably journalled a reel (7) for accomodating the string, such that the reel is surrounded by a jacket (2) forming part of the casing, whilst the casing is open at one end, seen in the direction of the axis of rotation of the reel. At its other end the casing has been provided with a cross wall (3) extending transversely to the axis of rotation of the reel. A slotted hole (4) is provided in the wall of the casing for the passage of the string. Said slotted hole extends from the open end of the casing to a position near the cross wall, whilst a guide means (19) for the string is located at the side of the cross wall remote from the jacket.

EP 0 349 029 A1

FIG.1

## Device for supporting a plant

The invention relates to a device for supporting a plant by means of a string attached to the device, whereby the device is provided with a casing and a supporting part connected to the casing, by which the device can be coupled to a horizontally extending wire, such that the device can be moved along the wire, whilst in the casing there is rotatably journalled a reel for accommodating the string, such that the reel is surrounded by a jacket forming part of the casing, whilst the casing is open at one end, seen in the direction of the axis of rotation of the reel, and is provided at its other end with a cross wall extending transversely to the axis of rotation of the reel.

Such a device is known from the Dutch patent application 278,539. Such devices are e.g. used for supporting tomato plants or the like, whereby the device is suspended from a wire provided at some distance above the ground, and whereby the free end of the string is connected to the plant. As the plant grows the string is gradually taken in in order to keep the growing plant in an upwardly extending position. With the device disclosed in the Dutch patent application 278,539 a spring, co-operating with the reel, is provided inside the casing, which spring tries to rotate the reel such that the string wound on the reel is taken in. The object of this is to keep the string taut, under the influence of the string, during the growth of the plant.

Apart from the fact that the use of a spring makes the device complicated and vulnerable the force produced in the string, which is transferred to the plant, will be greatest when the plant is still small, and will gradually decrease as the plant grows, whilst on the other hand the supported weight of the plant gradually increases. In spite of its complicated construction said device cannot ensure an effective support of the plant, therefore.

The object of the invention is to achieve a device of the above kind, which has a simple and effective construction and whereby the force directed at the plant can be adjusted by the user himself.

According to the invention this can be achieved in that a slotted hole is provided in the wall of the casing for the passage of the string, said slotted hole extending from the open end of the casing to a position near the cross wall, whilst a guide means for the string is located at the side of the cross wall remote from the jacket.

By using the device according to the invention a part of the string can at first be stretched between the device and the ground, after which the growing plant can be trained up along said string while it grows. During the period that fruits of the plant are harvested fruits are regularly picked near the lower side of the plant and the part from which the fruits have been removed is laid on the ground, so that the higher part of the plant, on which the fruits to be harvested later on are forming, will come closer to the ground. For said lowering and laying down the lower part of the plant at regular intervals the device is removed from the wire and the string supporting the plant is paid out, and subsequently the device is suspended from the wire again at a point spaced by some distance from the point where the device was removed from the wire. For paying out the string it is only necessary, with the device according to the invention, to free the part of the string extending through the slotted hole from the guide means and to move it in a direction remote from the cross wall, after which the string can be unwound from the reel without difficulty. Before suspending the device from the wire the string will be moved in the direction of the cross wall again and be guided around the guide means.

It is noted that from the Dutch patent application 8,202,226 there is known a device for supporting a plant, said device being provided with a T-shaped holder and a reel, whose axis of rotation extends perpendicularly to the holder. In said device the string must be guided around the T-shaped holder in a special manner, in order to prevent an undesired unwinding of the string. For unwinding the string it is furthermore necessary to turn the device through an angle of 90° relative to the wire. Working with said known device is cumbersome, therefore, whilst an additional disadvantage is that the reel is unprotected, and that consequently there is a danger that the tendrils of the plant become attached to the reel and thus impede the rotation of the reel.

The device will be explained in more detail hereinafter, with reference to a possible embodiment of the construction according to the invention illustrated in the accompanying figures.

Figure 1 is a side view of an embodiment of the device according to the invention.

Figure 2 shows the device illustrated in Figure 1, partly in section and partly in elevation, seen according to the arrow II in Figure 1.

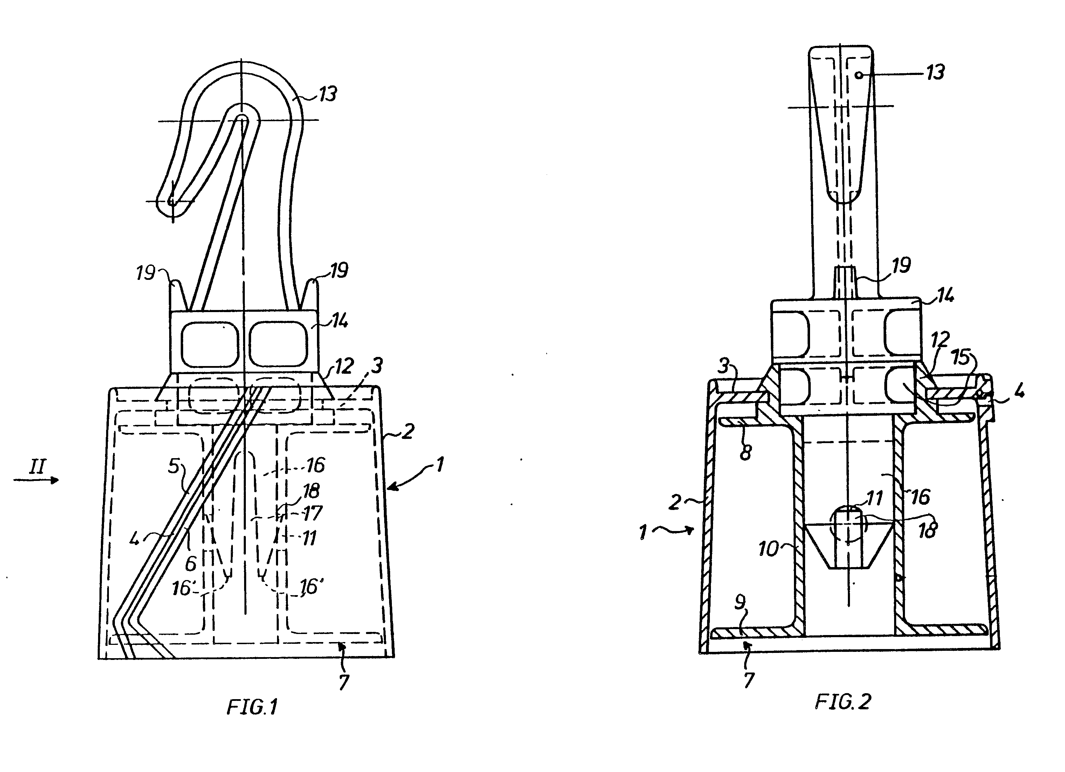

The device illustrated in the Figures 1 and 2 comprises a casing 1 provided with a jacket 2 and a cross wall 3, which is integral with the jacket and which extends perpendicularly to the longitudinal axis of the jacket near one end of said jacket. As will be apparent, particularly from Figure 2, the casing 1 is open at its end remote from the cross wall 3.

In the wall of the jacket 2 there is provided a slotted hole 4 which extends through the jacket from its open end located near the open end of the casing 1 to the cross wall 3. As will be apparent from Figure 1 the slotted hole 4 is built up from two parts including an angle with each other, which parts extend obliquely in opposite directions relative to the longitudinal axis of the jacket 2. The first oblique part, which extends from the open end of the slotted hole 4, is relatively short thereby, whilst the width of said slotted hole gradually decreases from the open end. The remaining part of the slotted hole 4, which slopes upwards towards the right, seen in Figure 1, has a width which at least substantially corresponds with the thickness of the string (not shown) which is to be accommodated in the device.

Preferably the casing is made of a plastic material and the jacket is resilient, such than the boundary walls of the slotted hole 4, reinforced by the ribs 5 and 6, respectively, can slightly move relative to each other, in order to enable an easy passage of the string.

As will furthermore be apparent from Figure 2 the internal diameter of the jacket 2 gradually decreases from the open end of said jacket in the direction of the cross wall 3.

The jacket surrounds a reel 7, which is provided with a pair of flanges 8 and 9 extending perpendicularly to the central axis of the reel coinciding with the central axis of the jacket 2, said flanges being mutually connected by a shell-shaped part 10. In the shell-shaped part 10, about midway between the flanges 8 and 9, there are provided diametrically opposed holes 11.

To the side of the flange 8 remote from the flange 9 there is fixed a projecting annular collar 12 integral with said flange, in which collar there is provided a circular groove. As is particularly apparent from Figure 2 said collar 12 is passed trough a hole provided in the cross wall 3, whereby the edge part of the cross wall 3 bounding said hole is accommodated in the groove provided in the collar 12. The part of the collar 12 located above the cross wall 3, seen in Figure 2, is slightly conical in order to facilitate the passage of said part of the collar through the opening provided in the cross wall 3. It will be apparent that as a result of this construction the reel 7 is connected to the casing 1 in such a manner that the reel 7 can indeed rotate about its longitudinal axis relative to the casing 1, but that it cannot move in axial direction relative to the casing 1.

The device is furthermore provided with a hook 13 forming a supporting part, said hook being connected to a shank consisting of three successive parts 14, 15 and 16. The shank part 14 having the largest diameter is supported on the upper side of the collar 12, whilst the centre shank part 15 is surrounded by the collar 12. The lowermost shank part 16, which has the smallest diameter, is accommodated to fit inside the shell-shaped part 10 of the reel. As is apparent from Figure 1 a slotted hole 17 is provided in the longitudinal direction of said shank part 16, so that said shank part is in fact built up from a pair of legs 16′, to be pressed with spring load towards each other, on whose sides remote from each other cams 18 are provided, which engage holes 11 provided in the shell-shaped part 10, such that the reel 7 is coupled to the shank of the hook 13, secured against rotation and displacement.

On the upper surface of the shank part 14 there are furthermore provided a pair of upwardly extending noses 19, which are arranged on both sides of the hook 13.

Normally a certain length of string will be wound on the reel 7, whilst the end of the string will be passed through the slotted hole 4. The device will furthermore be suspended, by means of the hook 13, from a horizontally extending wire which is stretched in a greenhouse or the like.

When the string supports a plant in the manner described above the string will exit from the casing through the slotted hole 4, at a point near the end of the slotted hole located near the cross wall 3, be guided around the shank of the hook 13, so that the string extends between the surfaces of the noses 19 directed towards the shank of the hook 13 and the opposite outer surfaces of the hook 13, and then extends downwards from the lower end of the hook 13. The string will be held in this position hereby as a result of the friction force, which is set up at the location of the passage of the string through the slotted hole 4 near the cross-wall 3, and as a result of the course which the string has been given by guiding the string around the guide means formed by the shank of the hook 13 with the noses 19 co-operating therewith.

When it is desired to unwind the string the hook can be detached from the wire supporting the device and the string can be freed from the shank part of the hook 13 by turning the device relative to the string, then the part of the string exiting from the slotted hole 4 can be moved along a certain distance in a direction remote from the cross wall 3. Once the part of the string extending trough the slotted hole 4 has been taken to some distance from the cross wall 3 the string can be unwound from the reel without any difficulty, whereby the casing 1 is held by hand and whereby the reel inside the casing rotates. When the desired length of the string has been unwound from the reel the string will be moved upwards in the slotted hole again, to a position against the cross wall 3 and be guided, by turning the device relative to the string, around the shank of the hook 13 and between said shank and the noses 19 again. Subsequently the device can be suspended, by means of the hook 13, from the wire again, at a point which is preferably located at some distance from the point where the device had been removed from the wire, so that a lower part of the plant supported by the string is laid on the ground.

## Claims

1. Device for supporting a plant by means of a string attached to the device, whereby the device is provided with a casing and a supporting part connected to the casing, by which the device can be coupled to a horizontally extending wire, such that the device can be moved along the wire, whilst in the casing there is rotatably journalled a reel for accommodating the string, such that the reel is surrounded by a jacket forming part of the casing, whilst the casing is open at one end, seen in the direction of the axis of rotation of the reel, and is provided at its other end with a cross wall extending transversely to the axis of rotation of the reel, characterized in that a slotted hole is provided in the wall of the casing for the passage of the string, said slotted hole extending from the open end of the casing to a position near the cross wall, whilst a guide means for the string is located at the side of the cross wall remote from the jacket.

2. Device according to claim 1, characterized in that the slotted hole extends from the cross wall in a direction including an angle with the longitudinal axis of the casing.

3. Device according to claim 2, characterized in that the part of the slotted hole joining the open end of the slotted hole extends obliquely relative to the central axis of the casing in an opposite direction as the remaining part of the slotted hole.

4. Device according to any one of the preceding claims, characterized in that the width of the part of the slotted hole joining the open and of the slotted hole gradually decreases in a direction remote from said open end.

5. Device according to any one of the preceding claims, characterized in that the guide means forms part of the shank of a hook forming the supporting part.

6. Device according to any one of the preceding claims, characterized in that noses fixed to the supporting part are provided, such that the string can be passed between said noses and said supporting part.

7. Device according to any one of the preceding claims, characterized in that the supporting part is fixed to the reel.

8. Device according to any one of the preceding claims, characterized in that the reel is rotatably supported by the cross wall.

FIG.1

FIG.2

EP 0 349 029 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-2428969 (WAVIN B.V.) <br> * claims 1, 8, 10; figures 1-5 * | 1-5 | A01G9/12 <br> B65H75/40 |
| Y | US-A-3952965 (FALCON) <br> * the whole document * | 1-5 | |
| A | DE-A-2024191 (NEISSER ET AL) <br> * the whole document * | 1, 6, 8 | |
| A | US-A-2237028 (ERICKSON) <br> * the whole document * | 1, 5 | |

TECHNICAL FIELDS SEARCHED (Int. Cl.5 )

A01G
B65H
A47G
F21V
B65D
A47F

The present search report has been drawn up for all claims

| Place of search | Date of completion of the search | Examiner |
|---|---|---|
| THE HAGUE | 07 SEPTEMBER 1989 | MEINDERS H. |